# EUROPÄISCHE PATENTSCHRIFT

(11) **EP 0 886 775 B1**
(45) Veröffentlichungstag und Bekanntmachung des Hinweises auf die Patenterteilung: **18.04.2007**
(21) Anmeldenummer: 97954380.8
(22) Anmeldetag: 11.12.1997
(51) Int. Cl.: G01N 27/416, G01N 33/20

(54) **VERFAHREN UND TAUCHMESSFÜHLER ZUM MESSEN EINER ELEKTROCHEMISCHEN AKTIVITÄT**
METHOD AND IMMERSION SENSOR TO MEASURE ELECTROCHEMICAL ACTIVITY
PROCEDE ET SONDE A IMMERSION POUR LA MESURE D'UNE ACTIVITE ELECTROCHIMIQUE

(30) Priorität: 18.12.1996 DE 19652596
(43) Veröffentlichungstag der Anmeldung: 30.12.1998
(73) Patentinhaber: Heraeus Electro-Nite International N.V., 3530 Houthalen (BE)
(72) Erfinder: BAERTS, Christiaan, B-3940 Beringen-Paal (BE); NEYENS, Guido, B-3680 Maaseik/Opoeteren (BE)
(74) Vertreter: Kühn, Hans-Christian
(86) Internationale Anmeldenummer: PCT/EP1997/006920
(87) Internationale Veröffentlichungsnummer: WO 1998/027421

(56) Entgegenhaltungen:
- EP-A- 0 330 264
- EP-A- 0 450 090
- US-A- 4 657 641

## Beschreibung

Die Erfindung betrifft ein Verfahren zum Messen einer elektrochemischen Aktivität einer auf einer Schmelze aufliegenden Schicht mittels eines elektrochemischen Sensors, der eine Meßzelle und eine Gegenelektrode aufweist.

Desweiteren betrifft die Erfindung einen Tauchmeßfühler zum Messen einer elektrochemischen Aktivität einer auf einer Schmelze aufliegenden Schicht mit einem an einem Träger angeordenten elektrochemischen Sensor, der eine elektrochemische Meßzelle und eine Gegenelektrode aufweist.

Ein derartiges Verfahren und ein derartiger Tauchmeßfühler sind aus Radex-Rundschau, Heft 1, 1990, Seiten 236- 243 bekannt. Hier wird ein Meßverfahren zum Messen von elektrochemischen Aktivitäten, insbesondere des Sauerstoffgehaltes von auf Eisenschmelzen aufliegenden Schlackeschichten beschrieben. Die Messung erfolgt dadurch, daß ein üblicher elektrochemischer Sensor, der eine Meßzelle mit Zirkonoxid und Magnesiumoxid als Elektrolyten und einer Gegenelektrode aufweist, in der flüssigen Schlackeschicht angeordnet ist. Insbesondere bedingt durch Inhomogenitäten in der Schlacke ist der Kontakt des Sensors zu dem zu messenden Material nicht exakt definiert, so daß das Meßergebnis nicht mit genügender Genauigkeit reproduzierbar ist.

Ein ähnlicher Sensor ist in EP 330 264 A1 beschrieben. Dieser Sensor wird benutzt zur Bestimmung der Badspiegelhöhe, indem die Phasengrenze zwischen der Metallschmelze und einer auf der Metallschmelze aufliegenden Schlackeschicht bestimmt wird. Ein Verfahren zur indirekten Messung elektrochemischer Aktivitäten in Schlacke auf Silberschmelzen ist in EP 0 450 090 B1 beschrieben. Bei diesem Verfahren ist eine elektrochemische Meßzelle in einer Silberschmelze angeordnet. Aus der Messung wird auf die Aktivität in Schlacke geschlossen.

Ausgehend von dem bekannten Stand der Technik liegt der Erfindung die Aufgabe zugrunde, ein Verfahren der gattungsgemäßen Art anzugeben, mit dem zuverlässig reproduzierbare und genaue Messungen in der Schicht möglich sind. Desweiteren besteht die Aufgabe der Erfindung darin, einen zur Durchführung des Verfahrens geeigneten Tauchmeßfühler anzugeben.

Erfindungsgemäß wird die Aufgabe bezüglich des Verfahrens dadurch gelöst, daß die Meßzelle und die Gegenelektrode zuerst in die Schmelze eingetaucht werden, wobei Meßzelle und Gegenelektrode vor Berührung mit der Schicht geschützt werden, daß Meßzelle und Gegenelektrode mit der Schmelze in Berührung gebracht und erwärmt werden (auf etwa die Temperatur der Schmelze), daß danach die Meßzelle zur Durchführung der Messung in die Schicht zurückgezogen wird und daß die Gegenelektrode sich während der Messung in der Schmelze befindet. Dabei erfolgt die Messung in der meist flüssigen Schicht, nachdem eine Temperaturangleichung des Sensors an die Umgebungstemperatur erfolgt ist. Die Angleichung der Temperatur ist unter anderem deshalb notwendig, um ein Erstarren von Material der Schicht an einem zu kalten Sensor zu verhindern. Während des Eintauchens des Sensors durch die Schicht sind Meßzelle und Gegenelektrode gegen Kontakt mit dem Material der Schicht durch übliche Schutzkappen geschützt, die sich in der Schmelze auflösen. Die Temperaturangleichung kann über die Sauerstoffaktivitätsmessung überwacht werden. Bei Erreichen eines Aktivitätsplateaus in der Meßkurve, die nach Eintauchen in die Schmelze gewonnen wird, ist die Temperaturangleichung erfolgt. Eine Überwachung dieser Angleichung ist auch mit einem Thermoelement möglich. Die Gegenelektrode ist während der Messung in der Schmelze angeordnet, also in einer genau definierten Umgebung, so daß genaue und gut reproduzierbare Meßwerte ermöglicht werden.

Zweckmäßigerweise sind Meßzelle und Gegenelektrode an einem Träger angeordnet, wobei gleichzeitig mit der Meßzelle die Gegenelektrode emporgezogen wird. Dabei kann während des Zurückziehens der Gegenelektrode zur (flüssigen) Schicht die elektrochemische Aktivität gemessen werden. Dadurch kann die Badspiegelhöhe der Schmelze bestimmt werden, da eine sprunghafte Änderung der elektrochemischen Aktivität gemessen wird, sobald die Gegenelektrode die Grenzschicht zwischen der Schmelze und der auf ihr liegenden (flüssigen) Schicht erreicht. Vorteilhafterweise wird während der Messung die Temperatur von Schmelze und/oder der Schicht bestimmt. Zweckmäßig ist es auch, daß die Messung während der Hubbewegung (der Bewegung des Zurückziehens) von Meßzelle und Gegenelektrode erfolgt. Insbesondere ist es auch sinnvoll, vor dem Zurückziehen der Meßzelle aus der Schmelze heraus die Sauerstoffaktivität der Schmelze zu bestimmen. Auf diese Weise kann sowohl die elektrochemische Aktivität, insbesondere die Sauerstoffaktivität der Schmelze und der auf ihr aufliegenden Schicht ermittelt werden und im gleichen Meßzyklus kann die Badtemperatur und die Badspiegelhöhe (Grenzfläche zwischen Schmelze und der darüberliegenden Schicht) mit einem einzigen Sensor ermittelt werden, so daß eine gesonderte Messung mit einem weiteren Sensor überflüssig wird. Die Messung in der Schmelze bzw. in der Schicht kann auch durchgeführt werden, während einer Unterbrechung der Hubbewegung des Tauchmeßfühlers, wobei sich Meßzelle und Gegenelektrode zur Messung des Sauerstoffgehaltes oder einer anderen elektrochemischen Aktivität der Schmelze in der Schmelze befinden, während sich die Meßzelle zur Messung des Sauerstoffgehaltes der Schicht in dieser befindet, wobei gleichzeitig die Gegenelektrode in der Schmelze angeordnet ist. In vorteilhafter Weise ist das erfindungsgemäße Verfahren einsetzbar zur Messung in einer Stahlschmelze sowie der darüber liegenden Schlackeschicht. Das Verfahren ist auch für die Messung in flüssigem Glas und darüberliegende Schichten durchführbar. Unter Schmelze im Sinne der Erfindung wird daher eine Metallschmelze oder eine Glasschmelze bzw. flüssiges Glas verstanden. Die Bestimmung der Sauerstoffaktivität in einer auf einer Stahlschmelze aufliegenden Schlackeschicht läßt auch Rückschlüsse auf den Gehalt anderer Schlackebestandteile als Eisenoxid zu. Dies ist beispielsweise in den obenbeschriebenem Stand der Technik ausführlich dargelegt.

Die Aufgabe wird für einen Tauchmeßfühler erfindungsgemäß dadurch gelöst, daß Meßzelle und Gegenelektrode eine Schutzkappe aufweisen und daß die Meßzelle in Eintauchstellung des Sensors oberhalb der Gegenelektrode angeordnet ist. Dadurch ist ein festgelegter Abstand zwischen Meßzelle und Gegenelektrode gegeben und es erfolgt eine gleichzeitige Bewegung von Meßzelle und Gegenelektrode, wobei der Abstand zwischen beiden stets erhalten bleibt.

Zweckmäßig ist es, daß der Träger als Trägerrohr ausgebildet ist und die Meßzelle an oder in der Seitenwand des Trägerrohres und die Gegenelektrode an der Stirnseite des Trägerrohres angeordnet ist. Vorteilhaft ist es auch, daß die Meßzelle in einer Öffnung in der Seitenwand des Trägerrohres angeordnet ist. In einer weiteren vorteilhaften Ausführung sind sowohl Meßzelle als auch Gegenelektrode am Eintauchende des Trägerrohres angeordnet, wobei die Gegenelektrode an einem Halter angeordnet ist, der am Eintauchende des Trägerrohres befestigt ist, so daß ihr aktiver Teil den notwendigen Abstand zur Meßzelle aufweist. Desweiteren ist es vorteilhaft zur Erzielung optimaler Meßergebnisse, daß die Längsachse der Meßzelle senkrecht zur Längsachse des Trägerrohres angeordnet ist. Wie hinreichend bekannt und in der Literatur ausführlich beschrieben, sind derartige Meßzellen in der Regel als einseitig geschlossene Röhrchen aus einem Festelektrolytmaterial ausgebildet, in dem die Referenzelektrode in einem Referenzmaterial angeordnet ist.

Zweckmäßig ist es weiterhin, daß der Abstand zwischen Meßzelle und Gegenelektrode (in Längsrichtung) mindestens 2 cm beträgt, da durch diesen Abstand mit größtmöglicher Sicherheit ein Toleranzbereich berücksichtigt ist, der sich durch einen Übergangsbereich zwischen Schmelze und der daraufliegenden Schicht ergibt. Dadurch wird gewährleistet, daß die Gegenelektrode während der Messung der Schicht tatsächlich in der Schmelze angeordnet werden kann. Zweckmäßig ist es weiterhin, daß am Eintauchende des Trägers ein Thermoelement angeordnet ist, um auf einfache Weise die Temperatur der Schmelze zu ermitteln.

Nachfolgend wird ein Ausführungsbeispiel der Erfindung anhand einer Zeichnung näher erläutert. In der Zeichnung zeigt
- Fig. 1: einen Tauchmeßfühler mit seitlich angeordneter Meßzelle,
- Fig. 2: einen Tauchmeßfühler mit frontseitig angeordneter Meßzelle,
- Fig. 3: eine schematische Darstellung des Meßverfahrens anhand verschiedener Positionen des Tauchmeßfühlers und
- Fig. 4: den Verlauf der elektrochemischen Spannung während des Meßverfahrens.

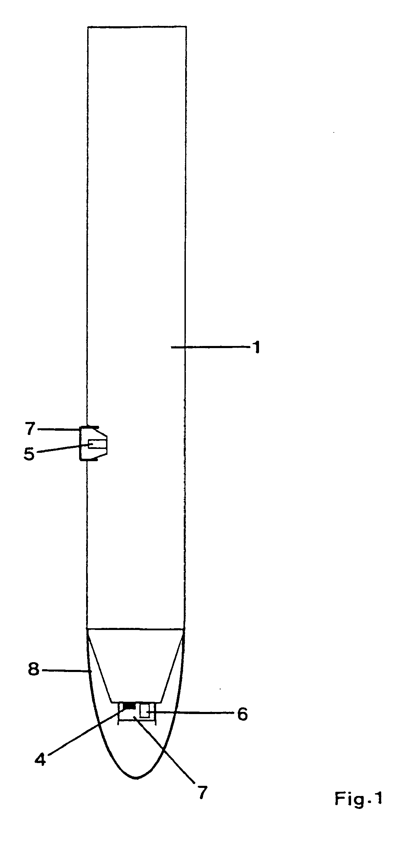

Der in Fig. 1 dargestellte Tauchmeßfühler weist ein Trägerrohr 1 auf, an dem zur Messung in einer Schlackeschicht 2 oberhalb einer Stahlschmelze 3 ein elektrochemischer Sensor angeordnet ist. Von dem elektrochemischen Sensor werden Meßleitungen durch das Trägerrohr 1 und eine auf das Trägerrohr 1 zum Gebrauch aufgesteckte übliche Lanze an Auswerteeinrichtungen geführt. Der eine Meßzelle 5 und eine Gegenelektrode 4 aufweisende elektrochemische Sensor ist zunächst durch übliche Schutzkappen 7 über der Gegenelektrode 4 und der Meßzelle 5 geschützt. Die Schutzkappen 7 können beispielsweise aus Pappe oder Metall oder einer Kombination beider Materialien bestehen. Das Eintauchende des Trägerrohres 1 ist zusätzlich durch eine Metallkappe 8 geschützt. Die Gegenelektrode 4 ist an dem Eintauchende des Trägerrohres 1 des Sensors angeordnet, während die Meßzelle 5 einige Zentimeter oberhalb der Gegenelektrode 4 (in Eintauchrichtung) angeordnet ist. In der Umgebung der Gegenelektrode 4 ist ein Thermoelement 6 angeordnet. Die Gegenelektrode 4 kann ringförmig ausgebildet sein. Dabei kann das Thermoelement 6 innerhalb dieser ringförmigen Gegenelektrode 4 angeordnet und dadurch durch die Gegenelektrode 4 mechanisch geschützt sein. Das Thermoelement 6 mißt die Temperatur in unmittelbarer Umgebung der Gegenelektrode 4.

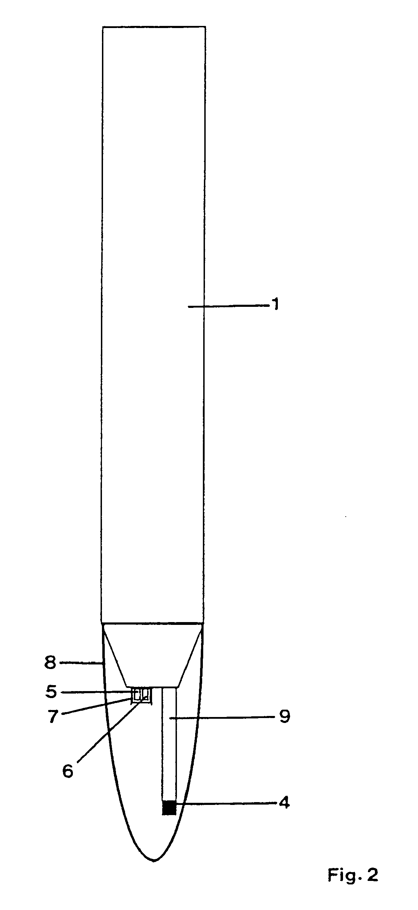

Fig. 2 zeigt eine weitere Möglichkeit, den elektrochemischen Sensor auszubilden, indem Meßzelle 5 und Gegenelektrode 4 an dem Eintauchende des Trägerrohrs 1 gehaltert sind. Die Meßzelle 5 ist von einer Schutzkappe 7 umgeben, innerhalb der auch ein Thermoelement 6 angeordnet ist und die einen mechanischen Schutz bewirkt. Die Gegenelektrode 4 weist 40 cm Abstand zur Meßzelle 5 auf und ist am Ende eines Halters 9 angeordnet, der am Eintauchende befestigt ist. Damit weist die an seiner Spitze befindliche Gegenelektrode 4 einen ausreichenden Abstand zu der Meßzelle 5 auf. Der Halter 9 kann ein Rohr sein, durch das die Anschlußleitungen der Gegenelektrode isoliert hindurchgeführt sind. Gegenelektrode 4 und Meßzelle 5 sind dabei von einer gemeinsamen Schutzkappe 8 geschützt.

Denkbar ist es auch, daß die Gegenelektrode 4 nicht an dem Trägerrohr 1, sondern an dem die Stahlschmelze 3 aufnehmenden Tiegel angeordnet ist, beispielsweise an dessen Boden. In diesem Fall ist eine Schutzkappe nicht erforderlich, da die Gegenelektrode 4 nicht mit der Schlakkeschicht 2 in Berührung kommt (allerdings kann mit dieser Anordnung die Badspiegelhöhe nicht bestimmt werden).

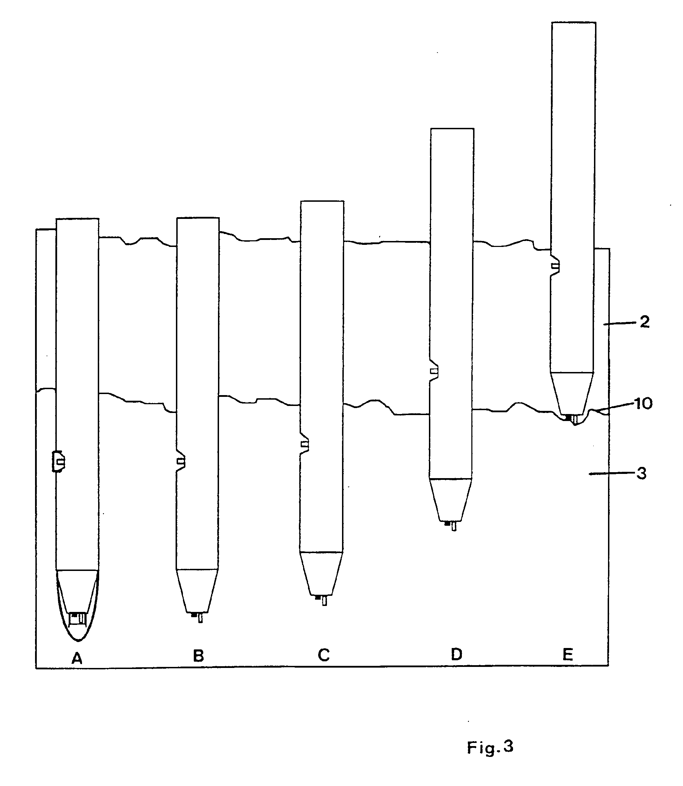

Der elektrochemische Sensor wird zur Durchführung der Messung zuerst derart durch die Schlackeschicht 2 in die Stahlschmelze 3 hineingetaucht, daß sowohl Gegenelektrode 4 als auch Meßzelle 5 innerhalb der Stahlschmelze 3 angeordnet sind. Beim Durchgang durch die Schlackeschicht 2 wird der Sensor durch die Schutzkappen 7; 8 vor einer Berührung und einem Anhaften der Schlacke geschützt.Dieser Zustand ist in Fig. 3 als Position A gekennzeichnet. In der Stahlschmelze 3 wird der Sensor erhitzt, so daß eine Temperaturangleichung an die Stahlschmelze 3 stattfindet. Die Schutzkappen 7; 8 werden dabei aufgelöst (Position B). In der in Fig. 3 dargestellten Position C wird zunächst die Sauerstoffaktivität (der Sauerstoffgehalt) der Stahlschmelze 3 gemessen. Danach wird der elektrochemische Sensor nach oben zurückgezogen, bis sich die Meßzelle 5 oberhalb der Stahlschmelze 3 in der Schlackeschicht 2 befindet.

Hier wird entweder während der Aufwärtsbewegung oder während eines Stillstandes des Sensors die Sauerstoffaktivität in der Schlackeschicht 2 gemessen (Position D).

Der Sensor wird anschließend weiter aus der Stahlschmelze 3 heraus nach oben gezogen. Sobald auch die Gegenelektrode 4 die Stahlschmelze 3 verläßt, d. h. in die Grenzschicht 10 zwischen Stahlschmelze 3 und Schlackeschicht 2 gelangt, steigt die bei dem Meßverfahren gemessene Spannung sprunghaft an, so daß die Grenzschicht 10 zwischen Stahlschmelze 3 und Schlackeschicht 2, d. h. die Badspiegelhöhe des Metallbades (Stahlschmelze 3) deutlich angezeigt wird (Position E).

Der Abstand zwischen der Gegenelektrode 4 und der Meßzelle 5 ist größer gewählt als die Dicke der Grenzschicht 10 zwischen Schlackeschicht 2 und Stahlschmelze 3; etwa 2 cm Abstand werden in einigen Fällen ausreichend sein. Etwa 40 cm Abstand haben sich als praktikabel erwiesen.

Auf die oben beschriebene Weise ist es möglich, nacheinander den Sauerstoffgehalt in der Stahlschmelze 3, den Sauerstoffgehalt in der Schlackeschicht 2 und die Höhe des Badspiegels (Grenzschicht 10) zu bestimmen.

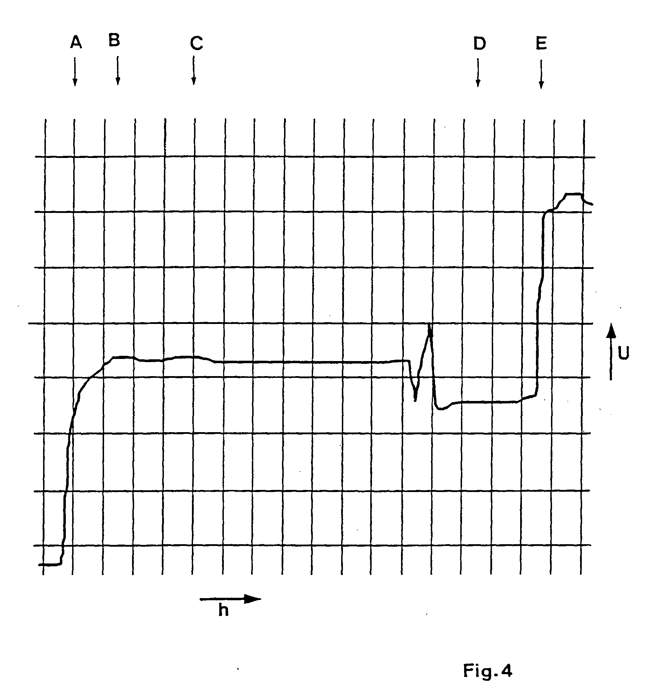

In Fig. 4 ist der Spannungsverlauf während der Messung dargestellt. Dabei ist auf der Abszisse die Höhe h der Sonde und auf der Ordinate die gemessene elektrochemische Spannung U aufgetragen. Anhand der Spannung kann auf allgemein bekannte Weise der Sauerstoffpartialdruck errechnet werden. Die einzelnen Positionen sind mit den gleichen Buchstaben bezeichnet, wie die entsprechenden Positionen in Fig. 3.Position A zeigt die Spannung, wenn Meßzelle 5 und Gegenelektrode 4 in die Stahlschmelze 3 eingetaucht werden, also den Beginn der Messung vor Einstellung des Temperaturgleichgewichtes. In Position C befindet sich die Meßzelle 5 in der Stahlschmelze 3, deren Sauerstoffaktivität gemessen wird In Position D befindet sich die Meßzelle 5 in der Schlackeschicht 2, während die Gegenelektrode 4 in der Stahlschmelze 3 angeordnet ist, so daß die Aktivität in der Schlackeschicht 2 gemessen wird. Position E zeigt den sprunghaften Anstieg der Spannung, wenn die Gegenelektrode 4 die Stahlschmelze 3 verläßt.

## Patentansprüche

1. Verfahren zum Messen einer elektrochemischen Aktivität einer auf einer Schmelze aufliegenden Schicht mittels eines elektrochemischen Sensors, der eine Meßzelle und eine Gegenelektrode aufweist, **dadurch gekennzeichnet, daß** die Meßzelle (5) und die Gegenelektrode (4) zuerst in die Schmelze eingetaucht werden, wobei Meßzelle(5) und Gegenelektrode(4) vor Berührung mit der Schicht geschützt werden, daß Meßzelle (5) und Gegenelektrode (4) mit der Schmelze in Berührung gebracht und erwärmt werden, daß danach die Meßzelle (5) zur Durchführung der Messung in die Schicht emporgezogen wird und daß die Gegenelektrode (4) sich während der Messung in der Schmelze befindet.

2. Verfahren nach Anspruch 1, **dadurch gekennzeichnet, daß** die Messung in einer Stahlschmelze(3) sowie einer darüber liegenden Schlackeschicht(2) durchgeführt wird.

3. Verfahren nach Anspruch 1 oder 2 **dadurch gekennzeichnet, daß** Meßzelle(5) und Gegenelektrode(4) an einem Träger angeordnet sind und gleichzeitig mit der Meßzelle(5) die Gegenelektrode(4) emporgezogen wird.

4. Verfahren nach einem der Ansprüche 1 bis 3, **dadurch gekennzeichnet, daß** vor dem Zurückziehen der Meßzelle (5) aus der Schmelze heraus die Sauerstoffaktivität der Schmelze bestimmt wird.

5. Verfahren nach einem der Ansprüche 1 bis 3, **dadurch gekennzeichnet, daß** die Messung während der Bewegung des Zurückziehens von Meßzelle (5) und Gegenelektrode (4) erfolgt.

6. Verfahren nach einem der Ansprüche 1 bis 5, **dadurch gekennzeichnet, daß** während der Messung die Temperatur der Stahlschmelze(3) und/oder der Schlackeschicht(2) bestimmt wird.

7. Tauchmeßfühler zum Messen einer elektrochemischen Aktivität einer auf einer Schmelze aufliegenden Schicht mit einem an einem Träger angeordneten elektrochemischen Sensor, der eine elektrochemische Meßzelle(5) und eine Gegenelektrode(4) aufweist, **dadurch gekennzeichnet, daß** Meßzelle(5) und Gegenelektrode(4) eine Schutzkappe(7;8) aufweisen, und daß die Meßzelle (5) zur Gegenelektrode derart beabstandet ist, daß sie in Eintauchstellung des Sensors oberhalb der Gegenelektrode (4) angeordnet ist.

8. Tauchmeßfühler nach Anspruch 7, **dadurch gekennzeichnet, daß** der Träger als Trägerrohr (1) ausgebildet ist und die Meßzelle (5) an oder in der Seitenwand des Trägerrohres (1) und die Gegenelektrode (4) am Eintauchende des Trägerrohres (1) angeordnet ist.

9. Tauchmeßfühler nach Anspruch 8, **dadurch gekennzeichnet, daß** die Meßzelle (5) in einer Öffnung in der Seitenwand des Trägerrohres (1) angeordnet ist.

10. Tauchmeßfühler nach Anspruch 7, **dadurch gekennzeichnet, daß** der Träger als Trägerrohr (1) ausgebildet ist und daß die Meßzelle (5) und die Gegenelektrode (4) am Eintauchende des Trägerrohres (1) angeordnet sind, wobei die Gegenelektrode(4) an einem Halter(9) angeordnet ist, der am Eintauchende des Trägerrohres(1) befestigt ist.

11. Tauchmeßfühler nach einem der Ansprüche 7 bis 10, **dadurch gekennzeichnet, daß** der Abstand zwischen Meßzelle (5) und Gegenelektrode (4) mindestens 2 cm beträgt.

12. Tauchmeßfühler nach einem der Ansprüche 7 bis 11, **dadurch gekennzeichnet, daß** am Eintauchende des Trägers ein Thermoelement (6) angeordnet ist.

## Claims

1. Method of measuring an electrochemical activity of a layer lying on top of molten material by means of an electrochemical sensor comprising a measuring cell and a counter-electrode, **characterized in that** the measuring cell (5) and the counter-electrode (4) are first immersed in the molten material with the measuring cell (5) and counter-electrode (4) protected from contact with the layer, the measuring cell (5) and counter-electrode (4) are brought into contact with the molten material and become hot, after which the measuring cell (5) is raised into the layer to carry out the measurement and the counter-electrode (4) stays in the molten material while the measurement is carried out.

2. Method according to Claim 1, **characterized in that** the measurement is carried out in molten steel (3) with a slag layer (2) lying on top.

3. Method according to Claim 1 or Claim 2, **characterized in that** the measuring cell (5) and counter-electrode (4) are arranged on a carrier and the counter-electrode (4) is raised along with the measuring cell (5).

4. Method according to any one of Claims 1 to 3, **characterized in that** the oxygen activity of the molten material is determined before the measuring cell (5) is withdrawn from the molten material.

5. Method according to any one of Claims 1 to 3, **characterized in that** the measurement is carried out during the withdrawal movement of the measuring cell (5) and counter-electrode (4).

6. Method according to any one of Claims 1 to 5, **characterized in that** the temperature of the molten steel (3) and/or slag layer (2) is determined during the measurement.

7. Immersion probe for measuring an electrochemical activity of a layer lying on top of molten material, with a sensor comprising an electrochemical measuring cell (5) and a counter-electrode (4) arranged on a carrier, **characterized in that** the measuring cell (5) and counter-electrode (4) have a protective cap (7; 8), and the measuring cell (5) is distanced from the counter-electrode so that it is above the counter-electrode (4) when the sensor is in the immersed position.

8. Immersion probe according to Claim 7, **characterized in that** the carrier is configured as a carrier tube (1) and the measuring cell (5) is arranged on or in the side wall of the carrier tube (1) and the counter-electrode (4) is arranged at the immersion end of the carrier tube (1).

9. Immersion probe according to Claim 8, **characterized in that** the measuring cell (5) is arranged in an opening in the side wall of the carrier tube (1).

10. Immersion probe according to Claim 7, **characterized in that** the carrier is configured as a carrier tube (1) and the measuring cell (5) and the counter-electrode (4) are arranged at the immersion end of the carrier tube (1), with the counter-electrode (4) arranged on a holder (9) attached to the immersion end of the carrier tube (1).

11. Immersion probe according to any one of Claims 7 to 10, **characterized in that** the distance between measuring cell (5) and counter-electrode (4) is at least 2 cm.

12. Immersion probe according to any one of Claims 7 to 11, **characterized in that** a thermocouple (6) is arranged at the immersion end of the carrier.

## Revendications

1. Procédé pour la mesure d'une activité électrochimique d'une couche superposée à un bain de fusion au moyen d'un capteur électrochimique comprenant une cellule de mesure et une contre-électrode, **caractérisé en ce que** la cellule de mesure (5) et la contre-électrode (4) sont d'abord plongées dans le bain de fusion, la cellule de mesure (5) et la contre-électrode (4) étant protégées avant d'être mises en contact avec la couche, **en ce que** la cellule de mesure (5) et la contre-électrode (4) sont mises en contact avec la fusion et chauffées, **en ce que** la cellule de mesure (5) est ensuite tirée vers le haut pour l'exécution de la mesure, et **en ce que** la contre-électrode (4) se trouve dans le bain de fusion pendant la mesure.

2. Procédé selon la revendication 1, **caractérisé en ce que** la mesure est exécutée dans un bain d'acier fondu (3) et dans une couche de laitier (2) superposée à celui-ci.

3. Procédé selon la revendication 1 ou la revendication 2, **caractérisé en ce que** la cellule de mesure (5) et la contre-électrode (4) sont disposées sur un support, et **en ce que** la contre-électrode (4) est tirée vers le haut avec la cellule de mesure (5).

4. Procédé selon l'une des revendications 1 à 3, **caractérisé en ce que** l'activité oxydante du bain de fusion est déterminée avant le retrait de la cellule de mesure (5) hors du bain de fusion.

5. Procédé selon l'une des revendications 1 à 3, **caractérisé en ce que** la mesure est effectuée pendant la traction de retrait de la cellule de mesure (5) et de la contre-électrode (4).

6. Procédé selon l'une des revendications 1 à 5, **caractérisé en ce que** la température du bain d'acier fondu (3) et/ou de la couche de laitier (2) est déterminée pendant la mesure.

7. Capteur immergé pour la mesure d'une activité électrochimique d'une couche superposée à un bain de fusion au moyen d'un capteur électrochimique comprenant une cellule de mesure électrochimique (5) et une contre-électrode (4), **caractérisé en ce que** la cellule de mesure (5) et la contre-électrode (4) sont munies d'un capuchon protecteur (7 ; 8), et **en ce que** la cellule de mesure (5) est distante de la contre-électrode de manière à être située au-dessus de la contre-électrode (4) en position de plongée du capteur.

8. Capteur immergé selon la revendication 7, **caractérisé en ce que** le support est réalisé comme tube support (1), et **en ce que** la cellule de mesure (5) est disposée contre ou dans la paroi latérale du tube support (1), et la contre-électrode (4) sur l'extrémité de plongée du tube support (1).

9. Capteur immergé selon la revendication 8, **caractérisé en ce que** la cellule de mesure (5) est disposée dans une ouverture de la paroi latérale du tube support (1).

10. Capteur immergé selon la revendication 7, **caractérisé en ce que** le support est réalisé comme tube support (1), et **en ce que** la cellule de mesure (5) et la contre-électrode (4) sont disposées sur l'extrémité de plongée du tube support (1), la contre-électrode (4) étant disposée sur une tige de soutien (9) fixée sur l'extrémité de plongée du tube support (1).

11. Capteur immergé selon l'une des revendications 7 à 10, **caractérisé en ce que** la distance entre la cellule de mesure (5) et la contre-électrode (4) est de 2 cm au moins.

12. Capteur immergé selon l'une des revendications 7 à 11, **caractérisé en ce qu'**un thermo-élément (6) est disposé sur l'extrémité de plongée du support.
